# EUROPÄISCHE PATENTSCHRIFT

(11) **EP 2 448 659 B1**
(45) Veröffentlichungstag und Bekanntmachung des Hinweises auf die Patenterteilung: **17.04.2013**
(21) Anmeldenummer: 11700885.4
(22) Anmeldetag: 07.01.2011
(51) Int. Cl.: B01F 7/00, B01F 13/10, B29B 13/10, B02C 18/12, B29B 17/04

(54) **LÄUFERSCHEIBE**
ROTOR DISK
DISQUE DE ROTOR

(30) Priorität: 14.01.2010 AT 442010
(43) Veröffentlichungstag der Anmeldung: 09.05.2012
(73) Patentinhaber: EREMA Engineering Recycling Maschinen und Anlagen Gesellschaft m.b.H., 4052 Ansfelden (AT)
(72) Erfinder: HACKL, Manfred, A-4040 Linz-Urfahr (AT); FEICHTINGER, Klaus, A-4040 Linz (AT); WENDELIN, Gerhard, A-4030 Linz (AT)
(74) Vertreter: Wildhack & Jellinek
(86) Internationale Anmeldenummer: PCT/AT2011/000003
(87) Internationale Veröffentlichungsnummer: WO 2011/085417

(56) Entgegenhaltungen:
- WO-A1-2008/098274
- AT-B- 411 342
- DE-C- 951 706
- DE-U- 1 858 029
- NL-C- 72 828

## Beschreibung

Die Erfindung betrifft eine Läuferscheibe gemäß dem Oberbegriff des Anspruchs 1.

Aus dem Stand der Technik sind Läuferscheiben in diversen Ausgestaltungen bekannt. Diese sind meist nahe dem Boden eines Aufnahmebehälters bzw. Schneidverdichters zur Behandlung und Aufbereitung von thermoplastischen Polymeren angeordnet und bestehen im Wesentlichen aus einem scheibenförmigen Werkzeugträger, an dessen Oberseite Misch- bzw. Rührwerkzeuge oder Zerkleinerungsmesser angeordnet sind. Im Betrieb dreht sich die Scheibe und die Werkzeuge erfassen, und zerkleinern gegebenenfalls, das im Behälter vorgelegte Kunststoffmaterial unter gleichzeitiger Erwärmung. Außerdem wird das Material durchmischt und ständig bewegt, sodass sich im Behälter eine Mischtrombe ausbildet.

Vorrichtungen zur Bearbeitung von Polymeren sind grundsätzlich ebenfalls aus dem Stand der Technik bekannt, z.B. aus der AT 375 867 B, AT 407 970 B oder WO 93/18902. Durch die umlaufenden Werkzeugträger bzw. Werkzeuge wird das behandelte Kunststoffgut durch Fliehkraftwirkung gegen die Behälterseitenwand geschleudert. Ein Anteil dieses Kunststoffgutes steigt entlang der Behälterseitenwand hoch und läuft in Form einer Mischtrombe um, fällt aber letztlich wieder ins Behälterzentrum zurück. Dadurch ergibt sich die gewünschte Verweilzeit der behandelten Kunststoffteilchen im Aufnahmebehälter, sodass das in ihn eingebrachte Kunststoffgut gut gemischt, durch die auftretenden Reibungskräfte ausreichend erwärmt und, im Fall von auf das Kunststoffgut zerkleinernd wirkenden Werkzeugen, auch ausreichend zerkleinert wird.

Es hat sich jedoch gezeigt, dass nicht das gesamte zur Behälterseitenwand geschleuderte Kunststoffgut an dieser Wand hochsteigt, sondern ein Anteil nach unten unter das unterste Werkzeug bzw. unter die unterste den Werkzeugträger bildende Scheibe gelangt. Dort kann dieser Kunststoffgutanteil durch Reibung unkontrolliert anschmelzen.

Man hat versucht, diesen Nachteil durch Anbringung von Förderrippen an der Unterseite dieser Scheibe zu vermeiden. Aus dem Stand der Technik ist es diesbezüglich bekannt, auf der Unterseite der Scheibe bzw. des Werkzeugträgers gerade und radiale Rippen anzubringen, die dazu dienen, Kunststoffgut, das in den Bereich zwischen den Boden des Schneidverdichters und der Unterseite des Werkzeugträgers gelangt, wieder nach außen zu fördern und aus diesem Bereich wieder zu entfernen.

Völlig befriedigt hat diese Maßnahme allerdings nicht. Insbesondere bei Aufnahmebehältern mit großen Dimensionen und einem entsprechend großen Füllvolumen von mehreren hunderten Kilogramm Polymermaterial, müssen auch entsprechend große Scheiben mit großen Durchmessern eingesetzt werden. Diese Scheiben müssen einerseits sehr genau gefertigt sein und außerdem sehr ruhig und regelmäßig rotieren, da der Abstand zwischen der Scheibe und dem Boden nur wenige Millimeter beträgt. In derart großdimensionierten Schneidverdichtern werden sehr hohe Anforderungen an die Förderwirkung der Rippen gestellt, da, wie erwähnt, im Behälter sehr viel zu behandelndes Material vorliegt, das einerseits zu bewegen ist und andererseits durch sein hohes Eigengewicht stark nach unten drückt und in den Bereich zwischen der Scheibe und dem Boden hineindrängt.

Beim Upscaling derartiger Vorrichtungen hat es sich gezeigt, dass die Förderleistung der bekannten Scheiben, die bei kleineren Behältern noch ausreichend funktionieren, bei großen Behältern nicht mehr ausreicht, um das Material vom heiklen Bereich fernzuhalten. Auch kann die Drehzahl der Mischwerkzeuge, um dem Material eine Aufwärtsbewegung zu geben und die Verweilzeit zu erhöhen, nicht beliebig erhöht werden, da durch die erhöhte Reibung wiederum mehr Wärme entstehen würde, die zu einem lokalen Aufschmelzen der Flakes führen könnte.

Immer wieder gelangen dann Polymerflakes in den Außenbereich zwischen Boden und Scheibe und verbleiben dort dauerhaft. Dadurch erhöht sich in diesem Bereich die Temperatur, die Flakes agglomerieren, werden klebrig und schmelzen gegebenenfalls auf, wodurch sich nur noch mehr Flakes zusammenlagern. Nach einiger Zeit beginnt die Scheibe zu rattern und läuft sich schlussendlich fest. Es ist somit wünschenswert, dass - sollte sich einmal doch ein Teilchen zwischen den Rippen und dem Behälterboden verkeilen - dieses Teichen möglichst rasch wieder frei wird und anschließend effektiv aus dem kritischen Bereich entfernt wird.

Außerdem gelangen nicht nur größere Flakes, sondern auch kleinere Staubteilchen in den kritischen Bereich unterhalb der Scheibe, wobei die Staubteilchen noch viel weiter Richtung Zentrum der Scheibe vordringen und dort verbleiben. Auch diese feinen Polymerpartikel werden dann zu stark erhitzt und sind im kritischen Bereich isoliert und gefangen.

Grundsätzlich ist dies auch bei Scheiben mit kleinerem Durchmesser problematisch, da speziell bei schweren Mahlgütern kleinere Drehzahlen, also relativ geringe Umfangsgeschwindigkeiten, verwendet werden.

Um eine Läuferscheibe zu schaffen, mit der, insbesondere auch bei hohem Füllvolumen und bei größeren Dimensionen, effektiv verhindert werden kann, dass Polymerpartikel in den kritischen Bereich zwischen der Scheibe und dem Boden des Aufnahmebehälters gelangen bzw. rasch und vollständig wieder aus diesem Bereich entfernt werden, ist vorgesehen, dass die Förderrippen in Laufrichtung konkav gekrümmt sind.

Es hat sich herausgestellt, dass dadurch bei der Bearbeitung und Aufbereitung von Kunststoffpartikeln effektiv bewirkt wird, dass auch bei hoher Füllmenge und entsprechend hohem Druck nach unten, sowohl größere und gröbere Polymerflakes, die eher nur in den Randbereich der Scheibe vordringen, als auch feinere Staubpartikel, die sehr weit nach innen vordringen können, nach außen gefördert werden, wodurch der kritische Bereich im Wesentlichen dauerhaft frei von solchen Teilchen bleibt. Falls doch ein Teilchen weiter vordringt, beispielsweise dann, wenn die Behandlung unerwartet unterbrochen und das Rührwerk gestoppt werden muss, wird es rasch wieder entfernt.

Die Gebläsewirkung bzw. Förderwirkung einer Scheibe mit derartigen Förderrippen ist in diesem besonderen System und für diesem speziellen Einsatzzweck sehr hoch, wodurch eine effektive und homogene Bearbeitung des im Aufnahmebehälter vorliegenden Polymermaterials möglich ist. In weiterer Folge werden Stand- und Reparaturzeiten, die durch ein Festfahren der Scheibe entstehen, vermieden. Auch wird die Qualität des zu behandelnden Materials besser, da lokale Überhitzungen oder ein Aufschmelzen verhindert wird. Eine solche Länferscheibe wird in WO 2008/098274 offenbart.

Es ist Aufgabe der vorliegenden Erfindung, die Förder wirkung der Scheibe zu verbessern.

Es hat sich als überraschend vorteilhaft für die Förderwirkung herausgestellt, wenn die Förderrippen nicht radial zum Zentrum hin ausgerichtet sind, sondern wenn die äußeren Endbereiche der Förderrippen nahezu tangential zum Rand der Läuferscheibe, insbesondere in einem äußeren Schnittwinkel zwischen 0° und 25°, vorzugsweise zwischen 12° und 18°, ausgerichtet sind.

Jeder Schnittwinkel wird jeweils im Schnittpunkt bzw. Einlaufpunkt der Förderrippe mit dem bzw. in den Rand der Läuferscheibe als Winkel zwischen der in diesem Schnittpunkt an die Förderrippe gelegten Tangente und der in diesem Schnittpunkt an den an den Rand der Läuferscheibe gelegten Tangenten gemessen.

Weitere vorteilhafte Ausführungsformen der Erfindung werden durch die abhängigen Ansprüche beschrieben:

Dabei hat sich gemäß einer vorteilhaften Weiterentwicklung der Scheibe als vorteilhaft erwiesen, wenn die Krümmungen gleichförmig, insbesondere kreisbogenförmig, sind.

In diesem Zusammenhang ist es besonders vorteilhaft vorzusehen, dass die Krümmungen aller Förderrippen untereinander gleich sind. Eine solche Läuferscheibe ist konstruktiv sehr einfach auszugestalten.

Wenn vorgesehen ist, dass zumindest zwei Gruppen von Förderrippen vorgesehen sind, die abwechselnd jeweils in verschiedenen Abständen vom Zentrum, nämlich von einem inneren Zentralbereich und von einem äußeren Zentralbereich, beginnen, wird die konstruktive Ausgestaltung der Scheibe ebenfalls erleichtert, da sehr eng zusammenstehende Förderrippen im Innenbereich der Scheibe vermieden werden.

Ebenso ist es vorteilhaft, wenn die inneren Anfangsbereiche der Förderrippen zum Zentrum bzw. zum inneren Zentralbereich bzw. zum äußeren Zentralbereich unter inneren Schnittwinkeln β₁ bzw. β₂ zwischen 0° und 45°, vorzugsweise zwischen 15° und 30°, angestellt sind. Dabei ist es vorteilhaft, wenn β₂ größer als β₁ ist.

Jeder Schnittwinkel wird jeweils im Schnittpunkt bzw. Einlaufpunkt der Förderrippe mit dem bzw. in den Rand der Läuferscheibe bzw. dem inneren Zentralbereich bzw. äußeren Zentralbereich gemessen. Der Schnittwinkel ist dabei jeweils der Winkel zwischen der in diesem Schnittpunkt an die Förderrippe gelegten Tangente und der in diesem Schnittpunkt an den inneren Zentralbereich bzw. äußeren Zentralbereich gelegten Tangente.

In diesem Zusammenhang ist es vorteilhaft, wenn vorgesehen ist, dass die Förderrippen einen im wesentlichen dreieckigen Querschnitt aufweisen, mit einer in Laufrichtung ausgebildeten geraden und im wesentlichen senkrecht zur Unterseite ausgerichteten Förderfläche und einer stromabwärts der Laufrichtung abgeschrägt abfallenden ebenen Flankenfläche. Dadurch wird gewährleistet, dass, wenn Teichen doch unter die Scheibe gelangen, diese rasch wieder frei werden und hinaus gefördert werden können und es nicht zu einem Festfahren oder Bremsen der Scheibe kommt.

Weiters ist gemäß einer vorteilhaften Ausführungsform der Erfindung vorgesehen, dass die Dicke des Scheibenkörpers nach außen zu abnimmt. Dieses Merkmal unterstützt die Wirkung der gekrümmten Förderrippen synergistisch und steigert den Effekt überraschenderweise noch zusätzlich. Insbesondere wird dadurch effektiv verhindert, dass größere Teilchen sich zwischen Boden und Scheibe verkeilen können und die Scheibe sich festfährt. Falls trotzdem Teilchen in Gefahr laufen, im geringen Zwischenraum zwischen Boden und Scheibenunterseite länger als vorgesehen zu verbleiben, so werden sie durch die sich nach außen hin verringernde Dicke leichter befreit und nach außen weggefördert.

In diesem Zusammenhang ist es überraschend, dass es ausreicht, wenn die Dicke nur um mindestens 1 mm, vorzugsweise zwischen 1,5 bis 3,5 mm, abnimmt, wobei diese Differenz zwischen der Dicke des Scheibenkörpers im Zentrum bzw. in einem inneren Zentralbereich und am äußeren Rand gemessen wird. Es hat sich überraschenderweise gezeigt, dass sich bereits mit derart geringfügigen Veränderungen eine große Verbesserung erzielen lässt.

Eine besonders vorteilhafte Ausführungsform sieht vor, dass sich die Höhe der Förderrippen in Richtung ihres Verlaufes nach außen hin vergrößert.

Insbesondere ist es dabei vorteilhaft, dass sich die Dicke des Scheibenkörpers nach außen hin im gleichen Ausmaß verringert, wie sich die Höhe der Förderrippen nach außen hin vergrößert bzw. dass die Gesamtdicke der Läuferscheibe über ihren Radius gleich und konstant bleibt. So ist eine hohe Laufruhe und eine effektive Förderung der Polymerteilchen aus dem kritischen Bereich erzielbar.

Weiters ist es vorteilhaft, wenn vorgesehen ist, dass die Dicke des Scheibenkörpers in einem Innenbereich gleichbleibend ist und sich erst ab einer Distanz vom Zentrum der Läuferscheibe, vorzugsweise ab einer Distanz von 60 % des Radius, insbesondere zwischen 60 % und 70 %, verringert. In gleicher Weise ist es vorteilhaft, wenn die Höhe der Förderrippen in einem Innenbereich gleichbleibend ist und sich erst ab einer Distanz vom Zentrum der Läuferscheibe, vorzugsweise ab einer Distanz von 60 % des Radius, insbesondere zwischen 60 % und 70 %, vergrößert. Die Dimensionsänderungen liegen dabei lediglich in einem äußeren Radialbereich, nämlich dort, wo die gröberen Flakes gerade noch eindringen können. Auf diese Weise werden sowohl grobe als auch feine Partikel effektiv nach außen verfrachtet.

Gemäß einer bevorzugten Ausführungsform ist vorgesehen, dass die der Oberseite fernsten Punkte bzw. Bereiche der Förderrippen eine plane Ebene definieren bzw. aufspannen. Von der Seite aus betrachtet, bleibt somit die Gesamtdicke der Läuferscheibe konstant.

In diesem Zusammenhang ist es vorteilhaft, wenn vorgesehen ist, dass die Oberseite des Scheibenkörpers planeben ist und/oder dass die Ebene parallel zur Oberseite ist. Eine derartige Konstruktion ist außerdem relativ einfach zu fertigen und sehr laufruhig.

Eine besonders wirksame Läuferscheibe ist dadurch gekennzeichnet, dass die Unterseite des Scheibenkörpers in dem Bereich, in dem sich ihre Dicke verringert, abgeschrägt ist und zur Oberseite und/oder zur Ebene hin geneigt, insbesondere in einem Winkel von maximal 3°, insbesondere zwischen 0,4° und 0,6°, ausgerichtet ist. Damit ergibt sich eine quasi-kegelstumpfförmige Ausgestaltung der Scheibe, wobei wiederum überraschenderweise gefunden wurde, dass nur geringfügige Abweichungen und Winkelmaße ausreichen, um eine wirkungsvolle Entfrachtung zu erzielen.

Eine konstruktiv einfache Ausführungsform sieht vor, dass die Verringerung der Dicke des Scheibenkörpers kontinuierlich in einer, vorzugsweise geraden bzw. planen, Ebene verläuft, wodurch auch Wirbelbildungen vermieden werden und die Laufruhe erhöht ist.

Ebenfalls wirkungsvoll ist eine Läuferscheibe allerdings auch, wenn vorgesehen ist, dass die Verringerung der Dicke des Scheibenkörpers diskontinuierlich bzw. in Stufen, gegebenenfalls einer einzigen Stufe, verläuft. Ob eine kontinuierliche oder diskontinuierliche Verringerung vorteilhafter ist, hängt unter anderem auch von der Art, der Form und den Dimensionen des zu verarbeitenden Materials ab, beispielsweise ob Folien, Flakes oder Granulate recycelt werden.

Um über die Förderscheibe auch Einfluss auf die Temperatur des zu bearbeitenden Kunststoffgutes nehmen zu können, ist gemäß einer vorteilhaften Weiterentwicklung vorgesehen, dass im Scheibenkörper ein, gegebenenfalls mit einem Kühlmittel ausgefüllter oder durchströmbarer, Hohlraum ausgebildet ist.

Weiters ist erfindungsgemäß vorgesehen, dass die Läuferscheibe in einem Schneidverdichter mit geringem Bodenabstand angeordnet ist. Eine besonders vorteilhafte Vorrichtung zur Behandlung und Aufbereitung von Kunststoffgut sieht dabei einen, insbesondere evakuierbaren, Aufnahmebehälter vor, wobei die erfindungsgemäße Läuferscheibe nahe der und parallel zur Bodenfläche angeordnet ist. Die Läuferscheibe ist dabei vorteilhafterweise von einer im wesentlichen vertikal ausgerichteten Welle getragen und antreibbar, so dass das im Aufnahmebehälter befindliche Kunststoffgut eine Umlaufbewegung um die Achse der Welle erhält.

Bei einer besonders vorteilhaften Ausgestaltung ist der Abstand zwischen der Läuferscheibe, nämlich zwischen den äußersten, scheibenfernsten Punkten bzw. Rändern der Förderrippen, und der Bodenfläche des Aufnahmebehälters geringer als die Dicke des Scheibenkörpers, vorzugsweise im Bereich zwischen 3 und 15 mm, vorzugsweise zwischen 4 bis 8 mm.

Weitere Vorteile und Ausgestaltungen der Erfindung ergeben sich aus der Beschreibung und den beiliegenden Zeichnungen.

Die Erfindung ist im folgenden anhand eines besonders vorteilhaften Ausführungsbeispiels in den Zeichnungen dargestellt und wird unter Bezugnahme auf die Zeichnungen beispielsweise beschrieben.
Fig. 1 zeigt die erfindungsgemäße Läuferscheibe von unten.
Fig. 2 zeigt eine Schnittansicht durch das Zentrum der Scheibe gemäß Fig. 1.
Fig. 3 zeigt eine vergrößerte Darstellung des Schnittes gemäß Fig. 2.
Fig. 4 zeigt einen Detailausschnitt der rechten Seite des Schnittes gemäß Fig. 2 bzw. Fig. 3.
Fig. 5 zeigt den Teilschnitt B-B von Fig. 1.
Fig. 6 zeigt Detailansicht A von Fig. 1.
Fig. 7 zeigt einen Ausschnitt eines Aufnahmebehälters mit darin angeordneter Scheibe.

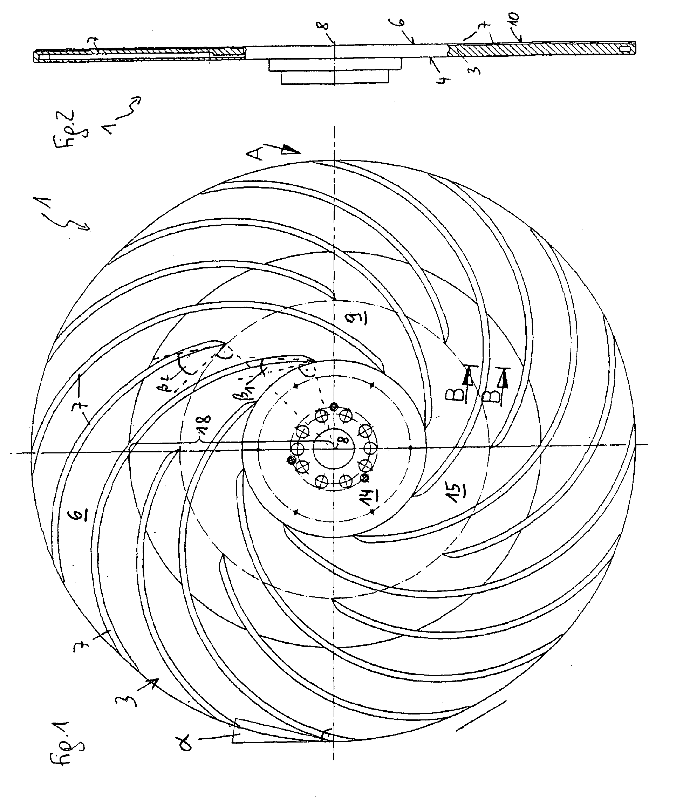

In Fig. 1 ist eine besonders wirkungsvolle und vorteilhafte Läuferscheibe 1 exemplarisch dargestellt, wobei Fig. 1 die Läuferscheibe 1 von unten, das heißt im Betrieb vom Behälterboden 17 aus gesehen, zeigt. In der Praxis werden derartige Läuferscheiben 1 meist in großvolumigen Aufnahmebehältern 2 eingesetzt, in denen viel Polymermaterial mit entsprechend hohem Gewicht vorliegt. Dementsprechend hoher Druck lastet auf der Läuferscheibe 1. Der Durchmesser einer solchen Läuferscheibe 1 liegt in diesen Fällen im Bereich von etwa 2 m und mehr.

Die Läuferscheibe 1 besitzt einen Scheibenkörper 3, auf dessen Oberseite 4 Misch- und/oder Zerkleinerungswerkzeuge 5 angeordnet sein können. Auf der gegenüberliegenden Unterseite 6 des Scheibenkörpers 3 ist eine Anzahl von sich von innen nach außen erstreckenden Förderrippen 7 angeordnet. Alle Förderrippen 7 sind in Laufrichtung der Scheibe 1 konkav gekrümmt, wobei die Krümmungen gleichförmig kreisbogenförmig verlaufen. Der Krümmungsradius der Förderrippen 7 ist geringer als der Radius der Läuferscheibe 1 und beträgt etwa 65 % davon. Außerdem sind die Krümmungen aller Förderrippen 7 untereinander nahezu gleich.

Es sind zwei Gruppen von Förderrippen 7 vorgesehen, nämlich längere und kürzere, die abwechselnd zueinander angeordnet sind. Die längeren Förderrippen 7 beginnen bei einem inneren kreisförmigen Zentralbereich 14, dessen Radius etwa 30 % des Radius der Läuferscheibe 1 ist. Die kürzeren Förderrippen 7 beginnen bei einem äußeren Zentralbereich 15, dessen Radius etwa 50 % des Radius der Läuferscheibe 1 ist. Alle Förderrippen 7 laufen durchgehend bis zum äußersten Rand der Läuferscheibe 1 bzw. des Scheibenkörpers 3.

Die Förderrippen 7 sind nicht radial zum Zentrum 8 der Läuferscheibe 1 ausgerichtet.

So sind die äußeren Endbereiche aller Förderrippen 7 nahezu tangential zum äußeren Rand der Läuferscheibe ausgerichtet und zwar in einem äußeren Schnittwinkel α von etwa 14°, gemessen im Einlaufpunkt der Förderrippe 7 an den Rand bzw. Umfang, zwischen der an den äußersten Rand gelegten Tangente und der an die Förderrippe 7 gelegten Tangente, wo die Förderrippe 7 den äußersten Rand bzw. Umfang berührt.

Die inneren Anfangsbereiche der längeren Förderrippen 7 sind zum inneren Zentralbereich 14 unter einem ersten inneren Schnittwinkel β₁ von etwa 15° angestellt, gemessen jeweils im Einlaufpunkt der Förderrippe 7, zwischen der Tangente an den inneren Zentralbereich 14 und der Tangente an die Förderrippe 7, wo diese bzw. die Förderippe 7 den inneren Zentralbereich 14 berührt.

Die inneren Anfangsbereiche der kürzeren Förderrippen 7 sind zum äußeren Zentralbereich 15 unter einem zweiten inneren Schnittwinkel β₂ von etwa 35° bis 40° angestellt, gemessen jeweils im Einlaufpunkt der Förderrippe 7, zwischen der Tangente an den äußeren Zentralbereich 15 und der Tangente an die Förderrippe 7, wo diese bzw. die Förderippe 7 den äußeren Zentralbereich 15 berührt.

Dabei ist es vorteilhaft, wenn β₂ größer als β₁ ist.

Im Berührungsbereich an den inneren Zentralbereich 14 und den äußeren Zentralbereich 15 sind die Förderrippen 7 spitz zulaufend bzw. endend.

Mit derart ausgestalteten Förderrippen 7 können im Betrieb sowohl große als auch kleine Polymerteilchen nach außen gefördert werden bzw. wird auf die von den Förderrippen 7 erfassten Teilchen eine vom Zentrum 8 der Läuferscheibe 7 nach außen gerichtete Kraft ausgeübt. Die Förderwirkung wird dabei in der Regel durch die mechanische Einwirkung der Förderrippen 7 auf die Polymerteilchen bewirkt, da die Behandlung in der Regel im Vakuum erfolgt. In gleicher Weise ist aber auch eine Behandlung unter Umgebungsdruck möglich, wodurch zusätzlich zu den mechanischen Berührungen zwischen Förderrippen 7 und Polymerteilchen auch Strömungseffekte auftreten.

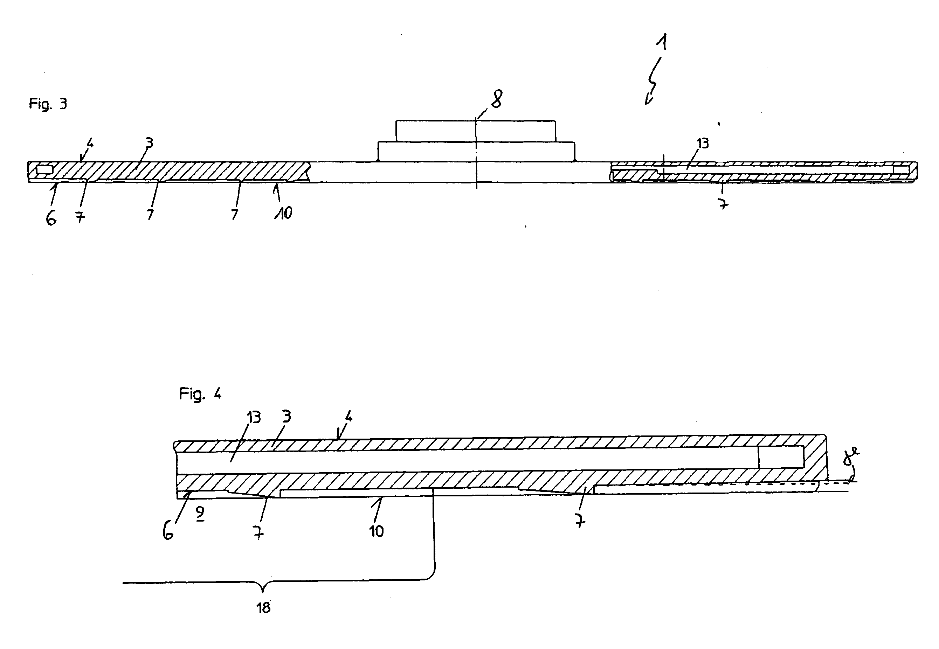

In den Fig. 2, 3 und 4 ist die Läuferscheibe 1 in einem Querschnitt durch das Zentrum 8 dargestellt. An der im Betrieb dem Behälter zugewendeten Oberseite 4 des Scheibenkörpers 3 können Misch- und/oder Zerkleinerungswerkzeuge 5 angeordnet werden. Im vorliegenden Ausführungsbeispiel sind solche Werkzeuge nicht dargestellt. Bei den Misch- und/oder Zerkleinerungswerkzeugen 5 kann es sich um Schaufeln, Messer od. dgl. handeln. Diese erfassen die Polymerteilchen und bringen sie in eine drehende Bewegung, wodurch sich im Behälter eine Mischtrombe ausbildet. Außerdem werden die Teilchen erwärmt und in ständiger Durchmischung gehalten, sodass auch bei erhöhten Temperaturen ein Kleben bzw. Zusammenkleben vermieden wird. Gegebenenfalls erfolgt auch ein Schreddern bzw. Zerkleinern von größeren Granulaten.

An der Unterseite 6 des Scheibenkörpers 3 sind die Förderrippen 7 angeordnet. Dabei ist die Dicke des Scheibenkörpers 3 in einem Innenbereich 9 konstant und gleichbleibend. Dieser Innenbereich 9 erstreckt sich bis in etwa zwei Drittel des Radius der Läuferscheibe 1. Ab einer bestimmten Distanz 18 vom Zentrum 8 der Läuferscheibe 1 verringert sich dann die Dicke des Scheibenkörpers 3. Im vorliegenden Beispiel beträgt die radiale Distanz 18 etwa 68 % des Radius der Läuferscheibe 1. Ebenfalls ab dieser radialen Distanz 18 vergrößert sich die Höhe der Förderrippen nach außen hin entsprechend, während die Höhe der Förderrippen 7 im Innenbereich 9 konstant und gleichbleibend ist.

Aus den Fig. 2 bis 4 ist erkennbar, dass die Dicke des Scheibenkörpers 3 nur geringfügig abnimmt, im vorliegenden Ausführungsbeispiel um lediglich 2 mm. In gleicher Weise und im gleichen Ausmaß erhöht sich auch die Höhe der Förderrippen 7 ihrem Verlauf nach folgend nach außen zu, sodass die Gesamtdicke der Läuferscheibe 1 über ihren gesamten Radius gleich und konstant ist. Es wird in diesem Außenbereich lediglich der Abstand zwischen dem Scheibenkörper 3 bzw. der Unterseite 6 und den obersten Punkten bzw. Kanten der Förderrippen 7 größer bzw. der Bereich zwischen den Förderrippen 7 etwas höher.

Die der Oberseite 4 fernsten Punkte bzw. Bereiche der Förderrippen 7 bilden eine plane Ebene 10, wobei diese Ebene 10 parallel zur ebenfalls planebenen Oberseite 4 des Scheibenkörpers 3 ausgerichtet ist.

Die Verringerung der Dicke des Scheibenkörpers 3 verläuft im vorliegenden Beispiel kontinuierlich bzw. über eine geneigte Ebene. Die Unterseite 6 des Scheibenkörpers 3 ist in dem äußeren Bereich, in dem sich ihre Dicke verringert, abgeschrägt und zur Oberseite 4 in einem Winkel y von etwa 0,5° nach oben geneigt. Die Läuferscheibe 1 bzw. der Scheibenkörper 3 weist somit in gewisser Weise die Form eines Kegelstumpfes mit abgeflachter äußerster Umlaufkante auf.

Gemäß einer weiteren möglichen Ausführungsform kann sich die Dicke des Scheibenkörpers 3 auch diskontinuierlich bzw. über Stufen verringern, was Vorteile bei gewisses Recyklaten bringt.

Weiters ist vorgesehen, dass im Inneren des Scheibenkörpers 3 zumindest ein von einem Kühlmittel durchströmter Hohlraum 13 ausgebildet ist, über den eine Kühlung der Scheibe erfolgen kann.

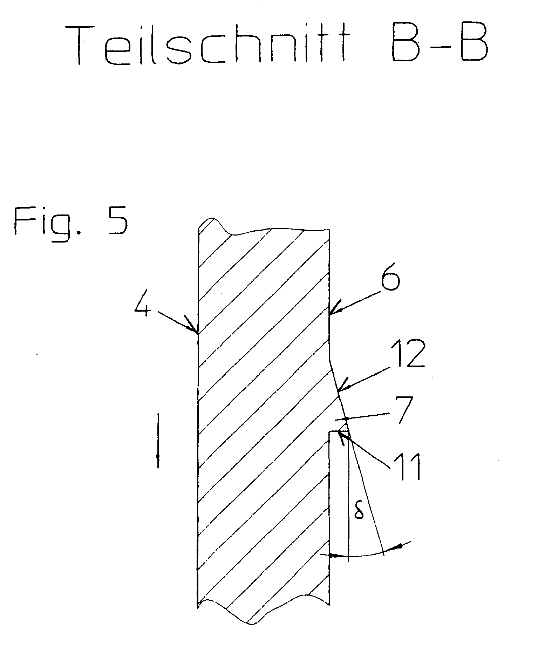

In Fig. 5 ist ein Querschnitt durch eine Förderrippe 7 gezeigt. Jede Förderrippe 7 weist einen im wesentlichen dreieckigen Querschnitt auf, mit einer in Laufrichtung ausgerichteten ebenen und im Wesentlichen senkrecht zur Unterseite 6 ausgerichteten Förderfläche 11 und einer stromabwärts zur Laufrichtung unter einem Winkel δ zwischen 10° und 35°, insbesondere etwa 15°, abgeschrägt abfallenden ebenen Flankenfläche 12.

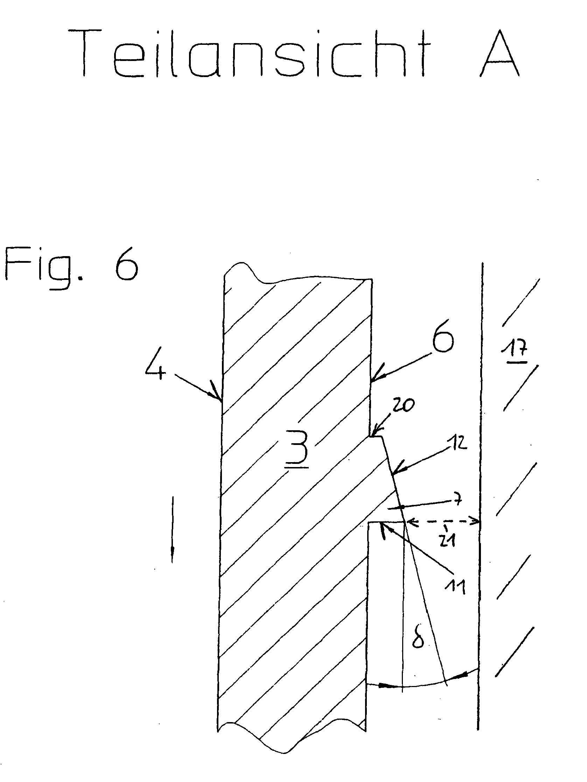

In Fig. 6 ist eine Ansicht auf eine Förderrippe 7 schräg von der Seite der Läuferscheibe 1 dargestellt. Erkennbar ist, dass die Flankenfläche 12 nicht kontinuierlich, direkt bzw. unter einem spitzen Winkel, sondern über eine Kante bzw. Stufe 20 in die Unterseite 6 übergeht. Der Übergang kann allerdings auch ohne Stufe 20 erfolgen.

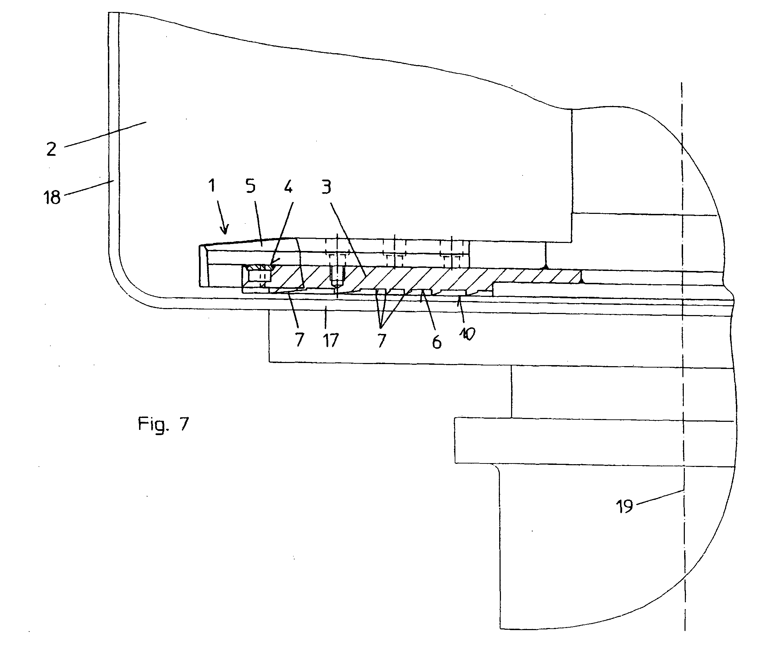

In Fig. 7 ist eine erfindungsgemäße Läuferscheibe 1 im Betrieb gezeigt, und zwar eingesetzt in eine Vorrichtung zur Behandlung und Aufarbeitung von Kunststoffmaterial. In Fig. 7 ist der linke untere Bereich einer solchen Vorrichtung dargestellt. Die Läuferscheibe 1 ist dabei in einem evakuierbaren Aufnahmebehälter 2 eingesetzt, der eine planebene horizontale Bodenfläche 17 und vertikale Seitenwände 18 aufweist. Die Läuferscheibe 1 ist ganz in Bodennähe und parallel zur Bodenfläche 17 angeordnet und wird von einer im Wesentlichen vertikal ausgerichteten Welle 19 getragen und ist über diese Welle 19 auch antreibbar. Durch die Drehung der Läuferscheibe 1, insbesondere durch die Mischwerkzeuge 5, wird das im Aufnahmebehälter 2 befindliche Material bewegt und erfährt u.a. eine Umlaufbewegung um die Achse der Welle 19.

Der Abstand 21 zwischen der Läuferscheibe 1, nämlich zwischen den äußersten, scheibenfernsten Punkten bzw. Rändern bzw. Kanten der Förderrippen 7 bzw. der Ebene 10, und der Bodenfläche 17 ist relativ gering und liegt im Bereich zwischen etwa 5 bis 6 mm. In Fig. 6 ist schematisch und nicht maßstabsgetreu der Abstand 21 zwischen der Bodenfläche 17 und der Läuferscheibe 1 eingezeichnet. Die Scheibe rotiert bei einem Durchmesser von etwa 2000 mm in der Regel mit einer Umdrehungsgeschwindigkeit von etwa 10 bis 300 Umdrehungen pro Minute, z.B. 20 bis150 U/min.

Eine besonders vorteilhafte Ausgestaltung einer Vorrichtung besitzt einen evakuierbaren Aufnahmebehälter 2 mit Kreisquerschnitt und mit vertikaler Achse, in welchen das zu verarbeitende Kunststoffmaterial, insbesondere thermoplastischer Art, z.B. PET (Polyethylenterephthalat), in Form von Mahlgut aus Flaschen oder Flaschenvorformlingen, Folien, Flakes usw. von oben durch eine Einbringöffnung eingebracht wird. An diese Öffnung ist, wenn das zu verarbeitende Material unter Vakuum verarbeitet werden muss, eine Schleuse angeschlossen, deren Schleusenkammer durch zwei Schieber abschließbar ist, welche von doppeltwirkenden Zylindern hin und her bewegt werden können. An die Schleuse ist oben ein Einfülltrichter angeschlossen, in welchen das zu verarbeitende Material chargenweise oder kontinuierlich durch eine nicht dargestellte Zufuhreinrichtung, z.B. ein Förderband, eingebracht wird. An die Schleusenkammer ist eine Evakuierungsleitung angeschlossen, die zu einer Evakuierungseinrichtung führt. Eine weitere Evakuierungsleitung führt vom Aufnahmebehälter 2 zur Evakuierungseinrichtung.

Der Aufnahmebehälter 2 hat vertikale Seitenwände 18 und einen horizontalen Boden 17. Nahe dem Boden 17 ist ein Werkzeugträger angeordnet, der von einer horizontalen kreisförmigen Läuferscheibe 1 gebildet ist, die auf einer den Boden 17 vakuumdicht durchsetzenden Welle 19 sitzt, die von einem Motor zur Drehung in Richtung des Pfeiles angetrieben wird. Die Scheibe 1 trägt an ihrer Oberfläche 4 mehrere, um den Umfang der Läuferscheibe 1 in gleichmäßigen Abständen verteilte Werkzeuge 5, welche bei der Drehung der Scheibe 1 auf das im Behälter 2 befindliche Kunststoffgut einwirken. Dadurch wird dieses Kunststoffgut einerseits zum Umlauf um die Achse 19 angetrieben, anderseits trachtet die Zentrifugalkraft das Kunststoffgut in radialer Richtung zur Seitenwand 18 zu bewegen. Es entsteht eine Mischtrombe derart, dass ein Anteil des Kunststoffgutes entlang der Seitenwand 18 hochsteigt, bei diesem Umlauf einen Kulminationspunkt erreicht und schließlich wieder in den Bereich der Behälterachse zurückfällt. An diesem Hochsteigen nimmt aber nicht das gesamte Kunststoffgut teil, denn ein Anteil des von der Scheibe 1 abgeschleuderten Kunststoffgutes trachtet in den kritischen Raum unterhalb der Scheibe 1 zu gelangen, insbesondere wenn viel Material im Behälter vorliegt.

Um dies etwas zu mindern, trägt die Scheibe 1 im vorliegenden Fall mehrere, um den Scheibenumfang in gleichmäßigen Abständen verteilt angeordnete schräg gestellte Schaufeln. Diese Schaufeln verleihen dem von der Scheibe 1 durch die Werkzeuge 5 abgeschleuderten Kunststoffgut eine bevorzugte Bewegung nach oben und verhindern somit einigermaßen, dass bei der Bearbeitung des Gutes im Behälter 2 Kunststoffgutanteile in den Raum unterhalb der Scheibe 1 des Werkzeugträgers gelangen können.

Diese Wirkung wird jedoch erst dadurch optimiert, wenn an der Unterseite 4 der Scheibe 1 die erfindungsgemäßen Förderrippen 7 angeordnet sind, die so angeordnet sind, dass das in den kritischen Bereich gelangende bzw. drängende Kunststoffgut in Richtung auf die Seitenwand 18 zu gefördert wird. Das so nach außen bewegte Kunststoffgut wird dann von den Schaufeln erfasst und wieder nach oben gefördert.

## Patentansprüche

1. Läuferscheibe (1) zum Einsetzen in einen Aufnahmebehälter (2) zur Behandlung von Polymeren, mit einem Scheibenkörper (3), an dessen Oberseite (4) Misch- und/oder Zerkleinerungswerkzeuge (5) vorsehbar sind und an dessen gegenüberliegender Unterseite (6) eine Anzahl von sich von innen nach außen erstreckenden Förderrippen (7) vorgesehen ist, mit denen im Betrieb Polymerteilchen nach außen förderbar sind bzw. die im Betrieb auf die von den Förderrippen (7) erfassten Polymerteilchen eine vom Zentrum (8) der Läuferscheibe (1) nach außen gerichtete Kraft ausüben, wobei die Förderrippen (7) in Dreh- bzw. Laufrichtung konkav gekrümmt sind, **dadurch gekennzeichnet, dass** die äußeren Endbereiche der Förderrippen (7) nahezu tangential zum Rand der Läuferscheibe (1), insbesondere unter äußeren Schnittwinkeln α zwischen 0° und 25°, vorzugsweise zwischen 12° und 18°, ausgerichtet sind, wobei die Schnittwinkel jeweils zwischen den an die Förderrippen (7) gelegten Tangenten und den an den Rand der Läuferscheibe (1) gelegten Tangenten, im Schnittpunkt dieser Tangenten bzw. in den Einlaufpunkten der Förderrippen (7), gemessen werden.

2. Läuferscheibe nach Anspruch 1, **dadurch gekennzeichnet, dass** die Krümmungen aller Förderrippen (7) untereinander gleich sind.

3. Läuferscheibe nach Anspruch 1 oder 2, **dadurch gekennzeichnet, dass** die Krümmungen gleichförmig, insbesondere kreisbogenförmig, sind.

4. Läuferscheibe nach einem der Ansprüche 1 bis 4, **dadurch gekennzeichnet, dass** zumindest zwei Gruppen von Förderrippen (7) vorgesehen sind, die abwechselnd jeweils in verschiedenen Abständen vom Zentrum (8) der Läuferscheibe (1), nämlich von einem inneren Zentralbereich (14) bzw. von einem äußeren Zentralbereich (15), beginnen.

5. Läuferscheibe nach einem der Ansprüche 1 bis 4, **dadurch gekennzeichnet, dass** die inneren Anfangsbereiche der Förderrippen (7) zum inneren Zentralbereich (14) bzw. zum äußeren Zentralbereich (15) unter ersten und zweiten inneren Schnittwinkeln β₁ bzw. β₂ zwischen 0° und 45°, vorzugsweise zwischen 15° und 30°, angestellt sind, wobei die zweiten inneren Schnittwinkel β₂ vorzugsweise größer als die ersten inneren Schnittwinkel β₁ sind, wobei die Schnittwinkel jeweils zwischen den an die Förderrippen (7) gelegten Tangenten und den an den inneren Zentralbereich (14) bzw. äußeren Zentralbereich (15) gelegten Tangenten, im Schnittpunkt dieser Tangenten bzw. in den Einlaufpunkten der Förderrippen (7), gemessen werden.

6. Läuferscheibe nach einem der Ansprüche 1 bis 5, **dadurch gekennzeichnet, dass** die Förderrippen (7) einen, insbesondere im wesentlichen dreieckigen, Querschnitt aufweisen, mit einer in Laufrichtung ausgebildeten geraden und im wesentlichen senkrecht zur Unterseite (6) ausgerichteten Förderfläche (11) und einer stromabwärts der Laufrichtung abgeschrägt abfallenden Flankenfläche (12), wobei die Flankenfläche (12) unter einem Winkel δ zur Unterseite (6), von 10° bis 35°, insbesondere von etwa 15°, ausgerichtet ist.

7. Läuferscheibe nach einem der Ansprüche 1 bis 6, **dadurch gekennzeichnet, dass** sich die Dicke des Scheibenkörpers (3) nach außen hin verringert, insbesondere dass die Dicke des Scheibenkörpers (3) um mindestens 1 mm, vorzugsweise zwischen 1,5 bis 3,5 mm, abnimmt,
und/oder
dass sich die Höhe der Förderrippen (7) in Richtung ihres Verlaufes nach außen hin vergrößert.

8. Läuferscheibe nach einem der Ansprüche 1 bis 7, **dadurch gekennzeichnet, dass** sich die Dicke des Scheibenkörpers (3) nach außen hin im gleichen Ausmaß verringert, wie sich die Höhe der Förderrippen (7) nach außen hin vergrößert.

9. Läuferscheibe nach einem der Ansprüche 1 bis 8, **dadurch gekennzeichnet, dass** die Gesamtdicke der Läuferscheibe (1) über ihren Radius gleich und konstant ist.

10. Läuferscheibe nach einem der Ansprüche 1 bis 9, **dadurch gekennzeichnet, dass** die Dicke des Scheibenkörpers (3) in einem Innenbereich (9) gleichbleibend ist und sich ab einer Distanz (18) vom Zentrum (8) der Läuferscheibe (1), vorzugsweise ab einer Distanz (18) von 60 % des Radius, insbesondere zwischen 60 % und 70 %, verringert und/oder dass die Höhe der Förderrippen (7) in einem Innenbereich (9) gleichbleibend ist und sich ab einer Distanz (18) vom Zentrum (8) der Läuferscheibe (1), vorzugsweise ab einer Distanz (18) von 60 % des Radius, insbesondere zwischen 60 % und 70 %, vergrößert.

11. Läuferscheibe nach einem der Ansprüche 1 bis 10, **dadurch gekennzeichnet, dass** die der Oberseite (4) fernsten Punkte bzw. Bereiche der Förderrippen (7) eine plane Ebene (10) definieren bzw. aufspannen,
und/oder
dass die Oberseite (4) des Scheibenkörpers (3) planeben ist und/oder dass die Ebene (10) parallel zur Oberseite (4) ist.

12. Läuferscheibe nach einem der Ansprüche 1 bis 11, **dadurch gekennzeichnet, dass** die Unterseite (6) des Scheibenkörpers (3) in dem Bereich, in dem sich ihre Dicke verringert, abgeschrägt ist und zur Oberseite (4) und/oder zur Ebene (10) hin geneigt, insbesondere in einem Winkel γ von maximal 3°, insbesondere zwischen 0,4° und 0.6°, ausgerichtet ist.

13. Läuferscheibe nach einem der Ansprüche 1 bis 12, **dadurch gekennzeichnet, dass** die Verringerung der Dicke des Scheibenkörpers (3) kontinuierlich verläuft *oder*
dass die Verringerung der Dicke des Scheibenkörpers (3) diskontinuierlich bzw. in Stufen, gegebenenfalls einer einzigen Stufe, verläuft.

14. Läuferscheibe nach einem der Ansprüche 1 bis 13, **dadurch gekennzeichnet, dass** im Scheibenkörper (3) zumindest ein, gegebenenfalls mit einem Kühlmittel ausgefüllter oder durchströmbarer, Hohlraum (13) ausgebildet ist.

15. Vorrichtung zur Behandlung und Aufbereitung von Kunststoffgut, mit einem, insbesondere evakuierbaren, Aufnahmebehälter (2), der eine plan ebene Bodenfläche (17) und Seitenwände (18) aufweist, wobei nahe der und parallel zur Bodenfläche (17) eine Läuferscheibe (1) nach einem der Ansprüche 1 bis 14 drehbar angeordnet ist, wobei die Läuferscheibe (1) insbesondere von einer im wesentlichen vertikal ausgerichteten Welle (19) getragen und antreibbar ist, so dass das im Aufnahmebehälter (2) befindliche Kunststoffgut bewegbar ist,
wobei vorzugsweise der Abstand zwischen den äußersten, scheibenfernsten Punkten bzw. Kanten der Förderrippen (7) bzw. der Ebene (10) und der Bodenfläche (17) geringer ist als die Dicke des Scheibenkörpers (3) und vorzugsweise zwischen 3 und 15 mm, vorzugsweise zwischen 4 und 8 mm, liegt.

## Claims

1. A carrier disc (1) for insertion into a receiving container (2) for treating polymers, said carrier disc (1) comprising a disc body (3), on whose top surface (4) mixing and/or cutting tools (5) may be provided and on whose opposite bottom surface (6) a number of conveyor ribs (7) extending outwards from the centre is provided, said conveyor ribs (7) transporting polymer particles outwards in operation or exercising a force directed outwards from the centre (8) on the polymer particles which are carried away by said conveyor ribs (7), said conveyor ribs (7) being concavely curved in the direction of rotation, **characterised in that** the outer terminal areas of the conveyor ribs (7) are fit almost tangentially to the edge of the carrier disc (1), particularly at outer intersection angles α between 0° and 25°, preferably between 12° and 18°, the intersection angles being measured between the tangents fit to the conveyor ribs (7) and the tangents fit to the edge of the carrier disc (1) at the intersection point of these tangents or at the points at which the conveyor ribs (7) intersect the disc's edge.

2. The carrier disc according to claim 1, **characterised in that** all the conveyor ribs (7) have the same curvatures.

3. The carrier disc according to claim 1 or 2, **characterised in that** the curvatures are uniform and particularly shaped like circular arcs.

4. The carrier disc according to any one of the claims 1 to 3, **characterised in that** at least two groups of conveyor ribs (7), which are alternately arranged at different distances from the centre (8) of the carrier disc (1), i.e. starting in an inner central area (14) or an outer central area (15), are provided.

5. The carrier disc according to any one of the claims 1 to 4, **characterised in that** the inner starting areas of the conveyor ribs (7) are arranged at first and second intersection angles β₁ and β₂ between 0° and 45°, preferably between 15° and 30°, in relation to the inner central area (14) and the outer central area (15), respectively, the second inner intersection anglesβ₂ preferably being larger than the first inner intersection anglesβ₁, the intersection angles being measured between the tangents fit to the conveyor ribs (7) and tangents fit to the inner central area (14) and the outer central area (15), respectively, at the point where these tangents intersect or at the points where the conveyor ribs (7) intersect the disc's edge.

6. The carrier disc according to any one of the claims 1 to 5, **characterised in that** the conveyor ribs (7) have a particularly essentially triangular cross-section and a conveying surface (11), which is flat in the direction of rotation and oriented essentially perpendicularly to the bottom surface (6), and a flank surface (12) which slopes downwards downstream in the direction of rotation at an angle δ between 10° and 35°, particularly of approximately 15°, in relation to the bottom surface (6).

7. The carrier disc according to any one of the claims 1 to 6, **characterised in that** the thickness of the disc body (3) decreases from its centre towards its edge, particularly by at least 1 mm, preferably by between 1.5 to 3.5 mm,
and/or
**in that** the height of the conveyor ribs (7) increases along their extension from the centre towards the edge.

8. The carrier disc according to any one of the claims 1 to 7, **characterised in that** the disc body's (3) thickness decreases from its centre towards its edge to the same extent to which the height of the conveyor ribs (7) increases along their extension from the centre towards the edge.

9. The carrier disc according to any one of the claims 1 to 8, **characterised in that** the overall thickness of the carrier disc (1) remains the same and constant along its radius.

10. The carrier disc according to any one of the claims 1 to 9, **characterised in that** the thickness of the disc body (3) is uniform in an inner area (9) and decreases starting at a distance (18) from the centre (8) of the carrier disc (1), preferably starting at a distance (18) which corresponds to 60 % of the radius, particularly to between 60 and 70 %, and/or **in that** the height of the conveyor ribs (7) is uniform in an inner area (9) and increases starting at a distance (18) form the centre (8) of the carrier disc (1), preferably starting at a distance (18) which corresponds to 60 % of the radius, particularly to between 60 and 70 %.

11. The carrier disc according to any one of the claims 1 to 10, **characterised in that** those spots and areas of the conveyor ribs (7) which are furthest removed from the top surface (4) define a flat plane (10),
and/or
**in that** the top surface (4) of the disc body (3) is flat and/or **in that** the plane (10) is parallel to said top surface (4).

12. The carrier disc according to any one of the claims 1 to 11, **characterised in that** the bottom surface (6) of the disc body (3) is bevelled in the area in which its thickness decreases and is inclined towards the top surface (4) and/or the plane (10), particularly at an angle γ of maximally 3°, particularly of between 0.4° and 0.6°.

13. The carrier disc according to any one of the claims 1 to 12, **characterised in that** the disc body's (3) thickness decreases continuously or **in that** the disc body's (3) thickness decreases discontinuously or gradually, optionally in a single step.

14. The carrier disc according to any one of the claims 1 to 13, **characterised in that** at least one cavity (13), which is filled with a coolant or through which a coolant may flow, is formed within the disc body (3).

15. A device for treating and processing plastic materials, including a, particularly evacuable, receiving container (2), which has a flat bottom surface (17) and lateral walls (18), a carrier disc (1) according to any one of the claims 1 to 14 being rotatably arranged close to and in parallel to said bottom surface (17), said carrier disc (1) being borne and drivable by an essentially vertically oriented shaft (19), so that the plastic material in the receiving container (2) can be caused to move around,
the distance between the outermost spots which are furthest removed from the disc or the edges of the conveyor ribs (7) or the plane (10) and the bottom surface (17) being preferably smaller than the thickness of the disc body (3) and amounting preferably to between 3 and 15 mm, preferably to between 4 and 8 mm.

## Revendications

1. Disque de support (1) pour l'insertion dans un récipient (2) pour le traitement de polymères, ledit disque de support (1) comprenant un corps (3) de disque, sur la surface supérieure (4) duquel des outils de mélange et/ou de broyage (5) peuvent être prévus et sur la surface inférieure (6) opposée duquel un nombre de nervures de transport (7), qui s'étendent vers l'extérieur, est prévu; en service, lesdits nervures de transport (7) transportant des particules polymères vers l'extérieur ou exercent une force orientée du centre (8) vers l'extérieur sur les particules polymères qui sont transportées par les nervures de transport (7) et étant courbées pour être concave dans le sens de rotation, **caractérisé en ce que** les domaines extérieurs terminaux des nervures de transport (7) sont orientés presque tangentiellement par rapport au bord du disque de support (1), notamment à des angles de coupe extérieur α entre 0° et 25°, de préférence entre 12° et 18°, lesdits angles de coupe étant mesurés entre les tangentes tracées aux nervures de support (7) et les tangentes tracées au bord du disque de support (1) au point d'intersection desdites tangentes ou au point où les nervures de transport (7) coupent le bord du disque.

2. Disque de support selon la revendication 1, **caractérisé en ce que** toutes les nervures de transport (7) ont la même courbe.

3. Disque de support selon la revendication 1 ou 2, **caractérisé en ce que** les courbes sont uniforme et notamment en forme des arcs de cercle.

4. Disque de support selon l'une des revendications 1 à 3, **caractérisé en ce qu'**au moins deux groupes de nervures de transport (7) sont prévus, les deux groupes étant aménagés alternativement, écartés des distances différentes du centre (8) du disque de support (1), à savoir commençant dans un domaine central intérieur (14) ou un domaine central extérieur (15).

5. Disque de support selon l'une des revendications 1 à 4, **caractérisé en ce que** les domaines d'origine des nervures de transport (7) sont aménagés à des premiers et deuxièmes angles de coupe β₁ et β₂ entre 0° et 45°, de préférence entre 15° et 30°, respectivement par rapport au domaine central intérieur (14) ou le domaine central extérieur (15), le deuxième angle de coupe intérieur β₂ étant, de préférence, plus grand que le premier angle de coupe intérieur β₁, les angles de coupe étant mesurés entre les tangentes tracées aux nervures de transport (7) et les tangentes tracées au domaine central intérieur (14) ou le domaine central extérieur (15) au point où ces tangentes se croisent ou aux points où les nervures de transport (7) coupent le bord du disque.

6. Disque de support selon l'une des revendications 1 à 5, **caractérisé en ce que** les nervures de transport (7) notamment ont une section sensiblement triangulaire et une surface de transport (11), qui est plat dans le sens de rotation et orientée sensiblement perpendiculaire par rapport à la surface inférieure (6), et une surface latérale (12) qui est inclinée vers le bas en aval dans le sens de rotation à un angle δ entre 10° et 35°, notamment d'environ 15°, par rapport à la surface inférieure (6).

7. Disque de support selon l'une des revendications 1 à 6, **caractérisé en ce que** l'épaisseur du corps (3) de disque diminue du centre vers son bord, notamment d'au moins 1 mm, de préférence d'entre 1,5 à 2,5 mm,
et/ou
**en ce que** la hauteur des nervures de transport (7) monte le long de leur extension du centre vers le bord.

8. Disque de support selon l'une des revendications 1 à 7, **caractérisé en ce que** l'épaisseur du corps (3) de disque diminue du centre vers son bord dans la même mesure que la hauteur des nervures de transport (7) monte le long de leur extension du entre vers le bord.

9. Disque de support selon l'une des revendications 1 à 8, **caractérisé en ce que** l'épaisseur total du disque de support est la même est constant le long de son radius.

10. Disque de support selon l'une des revendications 1 à 9, **caractérisé en ce que** l'épaisseur du corps (3) de disque est uniforme dans un domaine intérieur (9) et diminue à partir d'une certaine distance (18) du centre (8) du disque de support (1), de préférence à partir d'une distance (18) qui correspond à 60 % du radius, notamment à entre 60 et 70 %, et/ou **en ce que** la hauteur des nervures de transport (7) est uniforme dans un domaine intérieur (9) et monte à partir d'une certaine distance (18) du centre (8) du disque de support (1), de préférence à partir d'une distance (18) qui correspond à 60 % du radius, notamment à entre 60 et 70 %.

11. Disque de support selon l'une des revendications 1 à 10, **caractérisé en ce que** les endroits et domaines des nervures de transport (7) les plus éloignés de la surface supérieure (4) définissent une plaine (10) plate,
et/ou
**en ce que** la surface supérieure (4) du corps (3) du disque est plate et/ou **en ce que** la plaine (10) est parallèle à ladite surface supérieure (4).

12. Disque de support selon l'une des revendications 1 à 10, **caractérisé en ce que** la surface inférieure (6) du corps (3) du disque est biseautée dans le domaine où son épaisseur diminue et est inclinée vers la surface supérieure (4) et/ou la plaine (10), notamment à un angle γ de 3° au maximum, notamment d'entre 0,4 ° et 0,6°.

13. Disque de support selon l'une des revendications 1 à 12, **caractérisé en ce que** l'épaisseur du corps (3) du disque diminue d'une manière continue ou en ce quel'épaisseur du corps (3) du disque diminue d'une manière discontinue ou par étapes, facultativement par une seule étape.

14. Disque de support selon l'une des revendications 1 à 12, **caractérisé en ce qu'**au moins un espace creux (13), qui est rempli d'un agent réfrigérant ou à travers duquel coule un tel agent, est formé dans le corps (3) du disque.

15. Dispositif pour le traitement d'une matière plastique, comprenant un récipient (2) qui peut notamment être évacué et comprend une surface inférieure (17) plate et des parois latérales (18), un disque de support (1) selon l'une des revendications 1 à 14 étant aménagé d'une manière tournante près de et parallèle à ladite surface inférieure (17), ledit disque de support (1) étant supporté et actionné par un arbre (19), qui est orienté d'une manière sensiblement verticale pour agiter la matière plastique dans le récipient (2),
la distance entre les endroits et domaines des nervures de transport (7) les plus éloignés du disque ou la plaine (10) et la surface inférieure (17) étant, de préférence, inférieure à l'épaisseur du corps (3) de disque, s'élevant à entre 3 et 15 mm, de préférence à entre 4 et 8 mm.
